# FASCICULE DE BREVET EUROPEEN

(11) **EP 0 316 217 B1**
(45) Date de publication et mention de la délivrance du brevet: **20.01.1993**
(21) Numéro de dépôt: 88402760.8
(22) Date de dépôt: 03.11.1988
(51) Int. Cl.: G01L 1/10, G01G 3/16

(54) **Transducteur de force feuilleté en forme de double diapason, son procédé de fabrication, et son application dans une cellule de charge**
Aus Schichten angefertigter Kraftwandler nach der Form einer doppelten Stimmgabel, seine Herstellung und seine Anwendung in einer Lastmesszelle
Layered force transducer in the form of a double tuning fork, its production and its use in a load cell

(30) Priorité: 05.11.1987 FR 8715352
(43) Date de publication de la demande: 17.05.1989
(73) Titulaire: ESSELTE METO ELECTRONIC SCALES INTERNATIONAL, 78180 Montigny Le Bretonneux (FR)
(72) Inventeur: Sabiron, Gérard François, F-94100 Saint Maur (FR)
(74) Mandataire: Rinuy, Santarelli

(56) Documents cités:
- FR-A- 1 333 981
- US-A- 3 465 597
- US-A- 3 486 383
- PATENT ABSTRACTS OF JAPAN, vol. 11, no. 173 (P-582)[2620], 4 juin 1987, page 90 P 582; & JP-A-62 3630 (TERAOKA SEIKO CO. LTD) 09-01-1987

## Description

L'invention concerne un transducteur de force en forme de double diapason adapté à vibrer selon une fréquence propre qui est représentative de l'amplitude d'un effort longitudinal qui lui est appliqué, un procédé de fabrication d'un tel transducteur et une application de ce transducteur au sein d une cellule de charge, par exemple pour instrument de pesage.

On connaît déjà des transducteurs de force en forme de double diapason, notamment d'après les documents US-A-4.299.122 (Y.E.W.), DE-A-3.423.501 (SHINKO DENSHI) ou FR-A-1.333.981 (LITTON INDUSTRIES). L'intérêt de ces transducteurs est notamment que, du fait que les branches du double diapason vibrent en opposition de phase, les pertes d'énergie vibratoire y sont limitées. Ces tranducteurs sont équipés d'un dispositif d'excitation et d'un capteur de fréquence. Ils peuvent être montés au sein de cellules de charge mais aussi, notamment, dans des capteurs de pression.

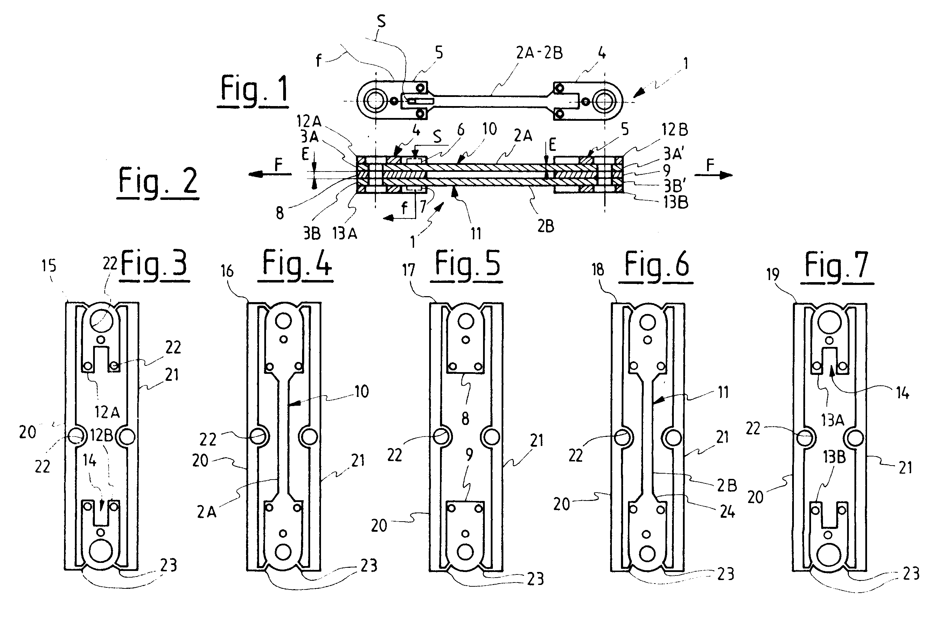

Bien que le document US-4.299.122 mentionne la possibilité de réaliser un tel transducteur en plusieurs pièces, ce document et le document allemand précité décrivent des transducteurs monoblocs. Quant au document FR-A-1.333.981 l'essentiel de sa description concerne des transducteurs monoblocs, et ce n'est qu'à titre de variante possible, sans précision, que sa figure 6 propose un transducteur qui peut être fabriqué au moyen d'un certain nombre de pièces cristallines telles que du quartz.

En pratique les transducteurs connus à ce jour sont découpés dans des blocs par électro-érosion par fil, ce qui se révèle lent et coûteux. Ainsi par exemple, l'électro-érosion de blocs en "ELINVAR" se fait avec une avance d'environ 2 mm/min. D'autre part, la commande de la trajectoire du fil de coupe est généralement complexe et coûteuse.

Comme les fréquences propres de ces transducteurs sont susceptibles de varier, non seulement avec l'effort appliqué mais aussi avec la longueur de leurs branches, les matériaux utilisés sont généralement choisis avec des coefficients de dilatation négligeables.

L'invention a pour objet de rendre plus économique et plus rapide la fabrication de tels transducteurs.

Elle propose ainsi un transducteur de force en forme de double diapason, comportant deux branches identiques parallèles solidaires en leurs extrémités de deux éléments de couplage, adaptées à vibrer en flexion, en opposition de phase, en réponse à des sollicitations vibratoires imposées, avec une fréquence propre représentative de l'amplitude d'un effort F appliqué longitudinalement aux éléments de couplage, caractérisé en ce qu'il est feuilleté, comportant deux lamelles métalliques élastiques identiques d'épaisseur constante formant lesdites branches et comportant des extrémités de plus grande largeur que ces branches et maintenues écartées par deux entretoises métalliques ayant l'une et l'autre la même épaisseur, ces entretoises et ces extrémités étant solidarisées au sein desdits éléments de couplage en ayant sensiblement le même profil extérieur.

Selon des dispositions préférées éventuellement combinées :
- les extrémités des lamelles élastiques sont bordées extérieurement par des plaquettes métalliques de rigidification et d'ancrage qui leur sont solidarisées et ont sensiblement le même profil extérieur ;
- les lamelles élastiques et les entretoises ont la même épaisseur E ;
- les plaquettes de rigidification, les lamelles élastiques et les entretoises ont la même épaisseur ;
- ce transducteur est formé de feuilles réalisées en un même matériau élastique ;
- ce transducteur est formé de feuilles collées, voire rivetées, ou rivetées et collées ;
- les branches élastiques ont une largeur c onstante ;
- les branches élastiques sont chacune formées de deux moitiés symétriques l'une de l'autre de largeur non constante qui se raccordent par une zone médiane de largeur minimale et se raccordent aux éléments de couplage par deux zones de même largeur minimale ;
- les moitiés ont une largeur maximale (L) qui est comprise entre 3 et 5 fois la largeur minimale (l) ;
- les moitiés des branches élastiques ont des flancs en dents de scie.

Selon une disposition avantageuse de l'invention, les entretoises se prolongent à l'opposé des branches par des bras de torsion terminés par des zones terminales de fixation. Ces bras ont de préférence une longueur au moins égale à 50 % de la longueur des branches du transducteur pouvant atteindre voire dépasser 200 % de cette longueur. Ces bras permettent un rattrapage d'une éventuelle torsion entre les zones auxquelles sont assujetties lesdites zones terminales de fixation. En minimisant les amortissements, ces bras permettent en outre d'augmenter le facteur de qualité Q du transducteur (rapport de la fréquence de résonance à la largeur en fréquence du pic d'amplitude à 70 % de l'amplitude de résonance).

En pratique la longueur de ces bras est de préférence au plus égale à celle des branches du diapason.

L'invention propose également un procédé de fabrication d'un transducteur de force en forme de double diapason comportant deux branches élastiques identiques parallèles reliées en leurs extrémités par des éléments de couplage, caractérisé en ce que l'on découpe deux lamelles élastiques métalliques identiques d'épaisseur constante comportant lesdites branches et des extrémités de plus grande largeur que ces branches, ainsi qu'une paire d'entretoises de même épaisseur constante et de même profil extérieur que ces extrémités, on interpose et on assujettit ces entretoises entre les extrémités de ces lamelles élastiques, en sorte d'obtenir un transducteur feuilleté.

Selon des dispositions préférées, éventuellement combinées :
- on découpe également des paires de plaquettes métalliques sensiblement de même profil extérieur que les entretoises et on les assujettit aux entretoises et aux extrémités des lamelles élastiques ;
- les lamelles élastiques, la paire d'entretoises et les paires de plaquettes sont découpées en sorte d'être liées, par des liaisons frangibles, à des bandes longitudinales de positionnement qui sont toutes identiques, on superpose ces bandes longitudinales et, après assujettissement des lamelles élastiques, des entretoises et des plaquettes, on coupe les liaisons frangibles.

A titre d'application, l'invention propose également une cellule de charge comportant un bloc comprenant de premier et second montants verticaux respectivement destinés à être fixés à un socle et à une plate-forme de pesage, reliés par quatre zones flexibles à deux poutres horizontales traversées en leur milieu par deux alésages verticaux en regard, ainsi que deux bras supérieur et inférieur respectivement montés en porte à faux sur les premier et second montants verticaux, le transducteur de force étant engagé verticalement au travers des alésages des poutres horizontales et lié aux extrémités des bras en porte-à-faux. Ce transducteur est avantageusement du type à bras de rattrapage de torsion (voir ci-dessus).

Selon une disposition préférée, le transducteur est articulé aux extrémités des bras en porte-à-faux selon des axes perpendiculaires aux montants verticaux et autres poutres horizontales.

Des objets, caractéristiques et avantages de l'invention ressortent de la description qui suit, donnée à titre d'exemple non limitatif, en regard des dessins annexés sur lesquels :
- la figure 1 est une vue de face d'un transducteur de force conforme à l'invention ;
- la figure 2 en est une vue en coupe longitudinale ;
- les figures 3 à 7 sont des vues de face de cinq éléments plans qui, après superposition, permettent de fabriquer le transducteur de force de la figure 1 ;
- la figure 8 est une vue agrandie des figures 3 et 7 ;
- la figure 9 est une vue agrandie de la figure 5 ;
- la figure 10 est une vue agrandie, à un détail près, des figures 4 et 6 ;
- la figure 11 est une vue agrandie, d'un élément similaire à celui des figures 4 et 6, selon un second mode de réalisation ; et
- la figure 12 est une vue en perspective d'une cellule de charge comportant le transducteur de force de la figure 1 ;
- les figures 13 à 17 sont des vues de face de cinq éléments plans qui, après superposition, permettent de constituer un autre transducteur conforme à l'invention ; et
- la figure 18 est une vue de face de cet autre transducteur.

Les figures 1 et 2 représentent un transducteur de force 1 en forme de double diapason, comportant deux branches élastiques identiques 2A et 2B parallèles solidaires en leurs extrémités de deux éléments de couplage 4 et 5 qui les maintiennent écartées avec un écart constant.

A la figure 2 apparaissent en traits mixtes un dispositif d'excitation 6 recevant un signal S d'excitation destiné à imposer des vibrations aux branches 2A et 2B, ainsi qu'un capteur de fréquence 7 destiné à relever la fréquence propre f de vibration de ces branches. Cette fréquence est représentative de l'amplitude d'un effort longitudinal, par exemple une traction appliquée entre les éléments de couplage 4 et 5 (voir les flèches F).

Conformément à l'invention le transducteur 1 est feuilleté parallèlement à sa longueur.

Ainsi qu'il ressort de la figure 2, le transducteur est constitué de deux lamelles élastiques d'épaisseur constante, formant les branches 2A et 2B, avec des extrémités 3A, 3A', 3B, 3B', qui sont maintenues avec un écart constant par des entretoises 8 et 9 qui ont l'une et l'autre la même épaisseur.

De manière préférée les lamelles élastiques et les entretoises ont la même épaisseur E.

De manière également préférée les extrémités des lamelles élastiques, qui ont ici une largeur sensiblement supérieure à celle des branches, sont bordées extérieurement par des plaquettes de rigidification et d'ancrage 12a, 12B, 13A, 13B qui de préférence ont une épaisseur égale ou supérieure à E que les lamelles élastiques 10 et 11 et les entretoises 8 et 9.

Les entretoises 8 et 9, les extrémités 3A, 3B, 3'A, 3'B des lamelles élastisques et les plaquettes 12A, 12B, 13A, 13B, ont avantageusement le même profil extérieur. De manière préférée des encoches 14 sont ménagées dans les plaquettes, près de la jonction des branches 2A et 2B à leurs extrémités, ce qui permet notamment la fixation par collage du dispositif d'excitation 6 et du capteur 7, chacun dans le plan de l'une des branches 2A ou 2B.

Le transducteur de force est symétrique vis à vis d'un plan longitudinal passant entre les branches 2A, 2B, vis à vis du plan de coupe de la figure 2 et vis à vis d'un plan transversal médian.

Un tel tranducteur feuilleté est fabriqué par découpe, par tout procédé approprié connu tel que estampage, microestampage, découpe au laser, microgravure ..., de plaques métalliques qui sont avantageusement de même nature. Les éléments ainsi découpés sont ensuite superposés puis assujettis les uns aux autres par collage et/ou rivetage et/ou soudure par points en sorte de constituer les éléments rigides de couplage.

Les entretoises 8 et 9, les plaquettes 12A et 12B, et les plaquettes 13A et 13B sont avantageusement découpées par paires.

Les figures 3 à 7 représentent des éléments découpés 15, 16, 17, 18 et 19 qui, après superposition et assujettissement permettent de construire le transducteur de la figure 1.

Ces éléments découpés 15 à 19 présentent la particularité de comporter tous, de chaque côté des plaquettes, des lamelles ou des entretoises, des bandes longitudinales 20 et 21 de même largeur et de même longueur, donc identiques si elles ont la même épaisseur, qui assurent la liaison des plaquettes ou des entretoises entre elles, rigidifient les paires de plaquettes ou d'entretoises et les lamelles élastiques et réduisent les risques de vrillage en cours de manipulation, et permettent un positionnement de grande précision des éléments les uns vis à vis des autres lors de leur superposition et de leur assujettissement réciproque.

Des oeillets de rivetage 22 sont ici prévus sur chaque élément, selon la même disposition relative, aussi bien sur les bandes longitudinales que dans les entretoises, les plaquettes et les extrémités des lamelles élastiques. Il peut, en outre ou à titre d'alternative, y avoir collage de ces éléments, par exemple avec une colle epoxy conductrice de type "EPOTECK".

Des liaisons frangibles 23 de faible section sont prévues pour la liaison des bandes longitudinales aux plaquettes, aux entretoises, ou aux lamelles élastiques. Elles sont coupées après rivetage, pour séparer les bandes longitudinales du transducteur une fois assemblé.

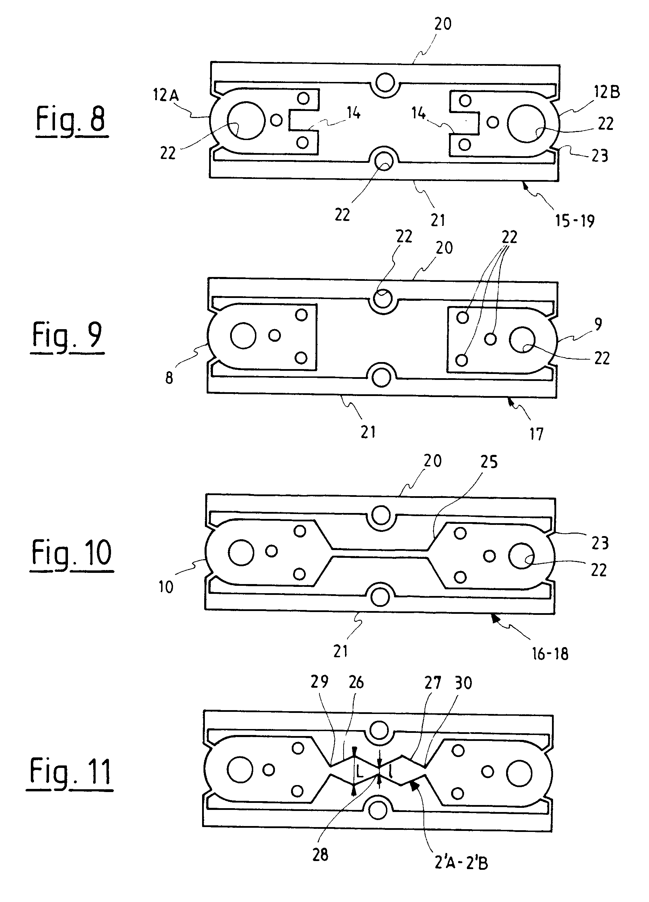

Les figures 8 à 10 représentent à plus grande échelle les éléments découpés des figures 3 à 7, à ceci près que, sur les figures 4 et 6, les branches 2A et 2B se raccordent à leurs extrémités par des zones triangulaires de transition 24 de plus petite taille que les zones triangulaires de transition 25 de la figure 10.

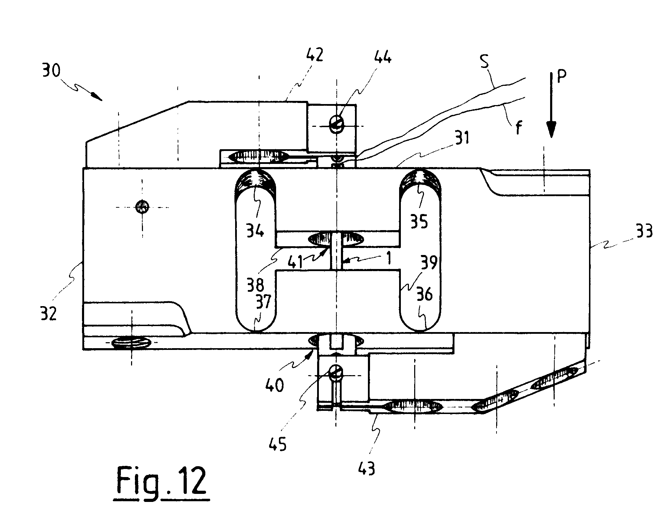

La figure 11 représente une variante de réalisation de l'élément 16 ou 18 dans laquelle la branche 2'A ou 2'B n'est pas de largeur constante. Cette branche est formée de deux moitiés 26 et 27 symétriques l'une de l'autre et qui se raccordent par une zone médiane 28 d'épaisseur minimale. Cela permet d'éliminer les harmoniques de vibration.

Ces moitiés 26 et 27 sont raccordées aux extrémités 3A et 3B par des zones de raccordement 29 et 30 de même largeur minimale que la zone médiane 28.

Le rapport entre les largeurs maximale L et minimale l de ces moitiés est ici de 5 environ. Il est de préférence compris entre 3 et 5 environ.

Ces moitiés 26 et 27 sont ici en dents de scie, c'est-à-dire qu'elles sont bordées par des flancs en ligne brisée selon des segments identiques.

En variante non représentée les flancs de ces moitiés sont arrondis.

La figure 12 représente à titre d'exemple, l'utilisation du transducteur de la figure 1 au sein d'une cellule de charge 30.

Cette cellule de charge est formée d'un bloc 31 comportant deux montants latéraux 32 et 33 respectivement destinés à être fixés à un socle et à une plate-forme de pesage (non représentés). Ces montants sont reliés par des zones flexibles 34 à 37 de même épaisseur à deux poutres horizontales 38 et 39 en sorte de former conjointement un parallélogramme déformable.

Le transducteur de force 1 est disposé verticalement, engagé au travers des poutres horizontales 38 et 39 à la faveur d'alésages 40 et 41, et est lié en ses extrémités 4 et 5 aux extrémités de deux bras en porte-à-faux respectivement supérieur 42 et inférieur 43 et respectivement solidaires des montants verticaux 32 et 33.

On comprend aisément qu'une force P appliquée vers le bas au montant vertical 33 induit par déformation du bloc 31 un effort de traction au sein du transducteur.

Le transducteur de force 1 est avantageusement articulé en ses extrémités sur les bras en porte-à-faux 42 et 43, autour d'axes transversaux 44 et 45 à la faveur des oeillets de rivetage 22 les plus gros, grâce à quoi une force pure est appliquée au transducteur, sans couple perturbateur venant notamment d'un excentrage de la position de la charge sur la plate-forme de pesée.

Le transducteur 1 est de préférence réalisé en un matériau à faible coefficient thermo-élastique. Il s'agit par exemple d un alliage "DURINVAL-C" de composition Ni 42, Cr 5, Ti 2,5, Al 0,5, Si 0,5 et le reste en fer, ou encore en "NI-SPAN-C 902" contenant 41 à 43,5 % de nickel (+ cobalt), 4,9 à 5,75 % de chrome, 2,2 à 2,75 % de titane, 0,3 à 0,8 % d'aluminium et le reste en fer, à des impûretés prés. Il peut également s'agir d'un cuivre-beryllium ou d'un bronze-beryllium dont les dérives dues au coefficient de dilatation thermique, ainsi que du module d'élasticité sont compensées électroniquement.

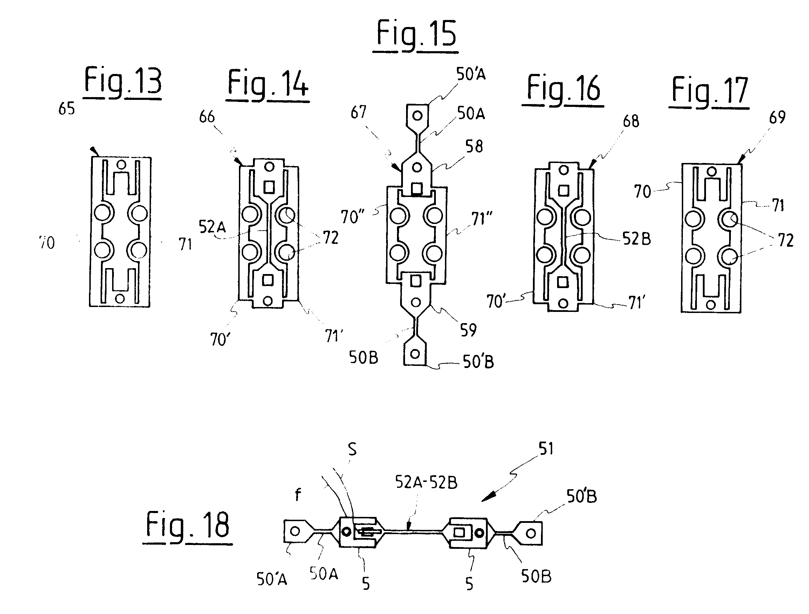

Les figures 13 à 18 sont une variante des figures 1 et 3 à 7, dans laquelle les entretoises 58 et 59 du transducteur 51 se prolongent à l'opposé des branches 52A et 52B par des bras de torsion 50A et 50B disposés dans le prolongement l'un de l'autre et terminés par des portions terminales de fixation 50'A et 50'B. Ils ont par exemple la même largeur que lesdites branches. La longueur de ces bras est de préférence comprise entre 50 et 200 % de la longueur des branches.

Sur ces figures les éléments découpés 65 à 69 sont en outre munis de bandes longitudinales 70 et 71, 70' et 71', 70'' et 71'' qui, ici, ne sont plus identiques les unes aux autres, du moment qu' elles comportent des perçages 72 disposés selon les mêmes dessins.

Les bras de torsion 50A et 50B permettent un rattrappage de torsion entre les zones terminales 50'A et 50'B de fixation du transducteur et les éléments 54 et 55 de couplage des branches du double diapason.

Ce sont ces zones terminales qui sont, par exemple, articulées sur les bras 42 et 43 de la cellule de charge 30.

Il va de soi que la description qui précéde n'a été proposée qu'à titre d'exemple non limitatif et que de nombreuses variantes peuvent être proposées par l'homme de l'art sans sortir du cadre de l'invention. Ainsi par exemple, en variante non représentée les branches oscillantes du transducteur peuvent comporter des masselottes en leur milieu, ou présenter un maximum de largeur.

On appréciera que les lamelles élastiques comportant les branches flexibles ont des extrémités dont la largeur vaut plusieurs fois la largeur des branches, tandis que cette largeur des branches vaut plusieurs fois l'épaisseur de ces lamelles (dans un rapport de préférence sensiblement égal à 4).

Le matériau constitutif des diverses feuilles du transducteur feuilleté est de préférence non magnétique (par exemple acier inoxydable ou en alliage cuivre-beryllium).

Le dispositif d'excitation 6 et le capteur de fréquence sont de préférence de type piezoélectrique bimorphe. Ils sont entièrement portés par les extrémités des branches en affleurant la racine de celles-ci (voir figure 1).

## Revendications

1. Transducteur de force en forme de double diapason, comportant deux branches identiques parallèles (2A, 2B, 52A, 52B) solidaires en leurs extrémités de deux éléments de couplage (4,5, 54, 55), adaptées à vibrer en flexion, en opposition de phase, en réponse à des sollicitations vibratoires imposées, avec une fréquence propre représentative de l'amplitude d'un effort F appliqué longitudinalement aux éléments de couplage, caractérisé en ce qu'il est feuilleté, comportant deux lamelles métalliques élastiques identiques d'épaisseur constante (10, 11) formant lesdites branches et comportant des extrémités (3A, 3B, 3'A, 3'B) de plus grande largeur que ces branches et maintenues écartées par deux entretoises métalliques (8, 9, 58, 59) ayant l'une et l'autre la même épaisseur, ces entretoises et ces extrémités étant solidarisées au sein desdits éléments de couplage en ayant sensiblement le même profil extérieur.

2. Transducteur selon la revendication 1, caractérisé en ce que les extrémités des lamelles élastiques sont bordées extérieurement par des plaquettes métalliques de rigidification et d'ancrage (12A, 12B, 13A, 13B) qui leur sont solidarisées et ont sensiblement le même profil extérieur.

3. Transducteur selon la revendication 1 ou la revendication 2, caractérisé en ce que les lamelles élastiques (10, 11) et les entretoises ont la même épaisseur E.

4. Transducteur selon la revendication 3, caractérisé en ce que les plaquettes de rigidification, les lamelles élastiques et les entretoises ont la même épaisseur.

5. Transducteur selon l'une quelconque des revendications 1 à 3, caractérisé en ce qu'il est formé de feuilles (10, 11, 8-9, 12A-12B, 13A-13B) réalisées en un même matériau élastique.

6. Transducteur selon l'une quelconque des revendication 1 à 5, caractérisé en ce qu'il est formé de feuilles rivetées (22) et/ou collées.

7. Transducteur selon l'une quelconque des revendications 1 à 6, caractérisé en ce que les branches élastiques (2A, 2B) ont une largeur constante.

8. Transducteur selon l'une quelconque des revendications 1 à 6, caractérisé en ce que les branches élastiques (2'A, 2'B) sont chacune formées de deux moitiés (26, 27) symétriques l'une de l'autre de largeur non constante qui se raccordent par une zone médiane de largeur minimale (28) et se raccordent aux éléments de couplage par deux zones (29,30) de même largeur minimale.

9. Transducteur selon la revendication 8, caractérisé en ce que les moitiés ont une largeur maximale (L) qui est comprise entre 3 et 5 fois la largeur minimale (l).

10. Transducteur selon la revendication 8 ou la revendication 9, caractérisé en ce que les moitiés des branches élastiques ont des flancs en dents de scie.

11. Transducteur selon l'une quelconque des revendications 1 à 10, caractérisé en ce que les entretoises (58, 59) se prolongent à l'opposé des branches par des bras de torsion (50A, 50B) terminées par des zones terminales de fixation (50'A, 50'B).

12. Transducteur selon la revendication 11, caractérisé en ce que la longueur de ces bras (50A, 50B) vaut de 50 % à 200 % celle des branches (52A, 52B).

13. Procédé de fabrication d'un transducteur de force en forme de double diapason comportant deux branches élastiques identiques parallèles (2A, 2B) reliées en leurs extrémités par des éléments de couplage (4, 5), caractérisé en ce que l'on découpe deux lamelles élastiques métalliques identiques (10 et 11) d'épaisseur constante comportant lesdites branches et des extrémités (3A, 3B, 3'A, 3'B) de plus grande largeur que ces branches ainsi qu'une paire d'entretoises de même épaisseur constante (8,9) et de même profil extérieur que ces extrémités, on interpose et on assujettit ces entretoises entre les extrémités (3A, 3B, 3'A, 3'B) de ces lamelles élastiques, en sorte d'obtenir un transducteur feuilleté.

14. Procédé selon la revendication 13, caractérisé en ce que l'on découpe également des paires de plaquettes métalliques (12A, 12B, 13A, 13B) sensiblement de même profil extérieur que les entretoises et on les assujettit aux entretoises et aux extrémités des lamelles élastiques.

15. Procédé selon la revendication 14, caractérisé en ce que les lamelles élastiques, la paire d'entretoises et les paires de plaquettes sont découpées en sorte d'être liées, par des liaisons frangibles (23), à des bandes longitudinales de positionnement (20, 21) qui sont toutes identiques, que l'on superpose ces bandes longitudinales et que, après assujettissement des lamelles élastiques, des entretoises et des plaquettes, on coupe les liaisons frangibles.

16. Application du transducteur selon l'une quelconque des revendications 1 à 12, au sein d'une cellule de charge (30) comportant un bloc (31) comprenant de premier et second montants verticaux (32, 33) respectivement destinés à être fixés à un socle et à une plate-forme de pesage, reliés par quatre zones flexibles (34-37) à deux poutres horizontales (38,39) traversées en leur milieu par deux alésages verticaux (40,41) en regard, ainsi que deux bras supérieur (42) et inférieur (43) respectivement montés en porte à faux sur les premier et second montants verticaux, le transducteur de force étant engagé verticalement au travers des alésages des poutres horizontales et lié aux extrémités des bras en porte à faux.

17. Application selon la revendication 16, caractérisé en ce que le transducteur est articulé aux extrémités des bras en porte à faux selon des axes (44, 45) perpendiculaires aux montants verticaux et aux poutres horizontales.

18. Application selon la revendication 16 ou la revendication 17, caractérisé en ce que le transducteur (51) comporte des bras de torsion (50A, 50B) à l'opposé de ses branches (52A, 52B).

## Claims

1. Double tuning fork force transducer comprising two parallel identical branches (2A, 2B, 52A, 52B) fastened at their ends to two coupling members (4, 5, 54, 55) and adapted to vibrate in bending in phase opposition in response to imposed vibrational loads with a natural frequency representative of the amplitude of a force F applied longitudinally to the coupling members, characterised in that it is laminated, comprising two constant thickness identical elastic metal blade members (10, 11) forming said branches and comprising ends (3A, 3B, 3'A, 3'B) of greater width than said branches and held apart by two metal spacers (8, 9, 58, 59) of the same thickness, said spacers and said ends being fastened within said coupling members and having substantially the same external profile.

2. Transducer according to claim 1 characterised in that the ends of the elastic blade members are bordered externally by stiffener and anchor metal plates (12A, 12B, 13A, 13B) attached to them and having substantially the same external profile.

3. Transducer according to claim 1 or claim 2 characterised in that the elastic blade members (10, 11) and the spacers have the same thickness E.

4. Transducer according to claim 3 characterised in that the stiffener plates, the elastic blade members and the spacers have the same thickness.

5. Transducer according to any one of claims 1 to 3 characterised in that it is formed from laminations (10, 11, 8-9, 12A-12B, 13A-13B) of the same elastic material.

6. Transducer according to any one of claims 1 to 5 characterised in that it is formed from riveted and/or adhesively bonded laminations (22).

7. Transducer according to any one of claims 1 to 6 characterised in that the elastic branches (2A, 2B) have a constant width.

8. Transducer according to any one of claims 1 to 6 characterised in that the elastic branches (2'A, 2'B) are each formed of two halves (26, 27) symmetrical to each other and of non-constant width which merge through a median area of minimal width (28) and which are joined to the coupling members by two areas (29, 30) of the same minimal width.

9. Transducer according to claim 8 characterised in that the halves have a maximum width (L) which is between three and five times the minimal width (l).

10. Transducer according to claim 8 or claim 9 characterised in that the halves of the elastic branches have sawtooth flanks.

11. Transducer according to any one of claims 1 to 10 characterised in that the spacers (58, 59) are extended on the side opposite the branches by torsion arms (50A, 50B) ending in terminal fixing areas (50'A, 50'B).

12. Transducer according to claim 11 characterised in that the length of said arms (50A, 50B) is between 50% and 200% that of the branches (52A, 52B).

13. Method of manufacturing a double tuning fork force transducer comprising two parallel identical elastic branches (2A, 2B) joined at their ends by coupling members (4, 5) characterised in that two identical metal elastic blade members (10 and 11) of constant thickness are cut out comprising said branches and ends (3A, 3B, 3'A, 3'B) of greater width than said branches and a pair of spacers (8, 9) of the same constant thickness and having the same external profile as said ends are cut out, said spacers are inserted between and attached to the ends (3A, 3B, 3'A, 3'B) of said elastic blade members to obtain a laminated transducer.

14. Method according to claim 13 characterised in that pairs of metal plates (12A, 12B, 13A, 13B) are also cut out having substantially the same external profile as the spacers and are attached to the spacers and to the ends of the elastic blade members.

15. Method according to claim 14 characterised in that the elastic blade members, the pair of spacers and the pairs of plates are cut out so that they are linked by fragile linkages (23) to longitudinal positioning strips (20, 21) which are all identical, in that said longitudinal strips are superposed and in that the fragile linkages are cut after attachment of the elastic blade members, spacers and plates.

16. Application of the transducer according to any one of claims 1 to 12 in a load cell (30) comprising a block (31) comprising first and second vertical uprights (32, 33) respectively adapted to be fixed to a base and to a weighing platform and joined by four flexible areas (34-37) to two horizontal beams (38, 39) with two facing vertical bores (40, 41) in their middle part as well as upper (42) and lower (43) arms respectively projecting cantilever fashion from the first and second vertical uprights, the force transducer being inserted vertically through the bores in the horizontal beams and joined to the ends of the projecting arms.

17. Application according to claim 16 characterised in that the transducer is articulated to the ends of the cantilever arms about axes (44, 45) perpendicular to the vertical uprights and to the horizontal beams.

18. Application according to claim 16 or claim 17 characterised in that the transducer (51) comprises torsion arms (50A, 50B) at the end opposite its branches (52A, 52B).

## Patentansprüche

1. Kraftwandler in Form einer doppelten Stimmgabel mit zwei identischen, parallelen, an ihren Enden fest mit zwei Kopplungselementen (4, 5, 54, 55) verbundenen Zweigen (2A, 2B, 52A, 52B), die gegenphasige Biegeschwingungen abhängig von aufgeprägten Schwingungsbeanspruchungen mit einer Eigenfrequenz durchführen können, die repräsentativ für die Amplitude einer in Längsrichtung auf die Kopplungselemente ausgeübten Kraft F ist, dadurch gekennzeichnet, daß er lamelliert ist und zwei gleiche, elastische Metallamellen (10, 11) mit gleicher Dicke aufweist, die die Zweige bilden und Enden (3A, 3B, 3'A, 3'B) aufweisen, die breiter als die Zweige sind und von zwei metallischen Stegen (8, 9, 58, 59) in Abstand voneinander gehalten sind, die die gleiche Dicke haben, wobei diese Stege und diese Enden im Inneren der Kopplungselemente mit im wesentlichen dem gleichen Außenprofil miteinander verbunden sind.

2. Wandler nach Anspruch 1, dadurch gekennzeichnet, daß die Enden der elastischen Lamellen außen durch metallische Versteifungs- und Verankerungsplatten (12A, 12B, 13A, 13B) eingefaßt sind, die fest mit ihnen verbunden sind und im wesentlichen das gleiche Außenprofil haben.

3. Wandler nach Anspruch 1 oder 2, dadurch gekennzeichnet, daß die elastischen Lamellen (10, 11) und die Stege die gleiche Dicke E haben.

4. Wandler nach Anspruch 3, dadurch gekennzeichnet, daß die Versteifungsplatten, die elastischen Lamellen und die Stege die gleiche Dicke haben.

5. Wandler nach einem der Ansprüche 1 bis 3, dadurch gekennzeichnet, daß er aus Folien (10, 11, 8-9, 12A-12B, 13A-13B) aufgebaut ist, die aus einem elastischen Material hergestellt sind.

6. Wandler nach einem der Ansprüche 1 bis 5, dadurch gekennzeichnet, daß er aus vernieteten (22) und/oder verklebten Folien hergestellt ist.

7. Wandler nach einem der Ansprüche 1 bis 6, dadurch gekennzeichnet, daß die elastischen Zweige (2A, 2B) eine konstante Breite haben.

8. Wandler nach einem der Ansprüche 1 bis 6, dadurch gekennzeichnet, daß die elastischen Zweige (2'A, 2'B) jeweils aus zwei zueinander symmetrischen Hälften (26, 27) mit nichtkonstanter Breite gebildet sind, die durch eine Mittelzunge (28) mit minimaler Breite verbunden sind und mit den Kopplungselementen über zwei Zonen (29, 30) mit der gleichen minimalen Breite verbunden sind.

9. Wandler nach Anspruch 8, dadurch gekennzeichnet, daß die Hälften eine maximale Breite (L) haben, die zwischen dem 3- und 5-fachen der minimalen Breite (l) beträgt.

10. Wandler nach Anspruch 8 oder 9, dadurch gekennzeichnet, daß die Hälften der elastischen Zweige sägezahnförmige Flanken aufweisen.

11. Wandler nach einem der Ansprüche 1 bis 10, dadurch gekennzeichnet, daß die Stege (58, 59) entgegen den Zweigen durch Torsionsarme (50A, 50B) verlängert sind, die durch Befestigungsendzonen (50'A, 50'B) abgeschlossen sind.

12. Wandler nach Anspruch 11, dadurch gekennzeichnet, daß die Länge dieser Arme (50A, 50B) 50 % bis 200 % der Länge der Zweige (52A, 52B) beträgt.

13. Verfahren zum Herstellen eines Kraftwandlers in Form einer doppelten Stimmgabel mit zwei identischen, elastischen, parallelen Zweigen (2A, 2B), die an ihren Enden Über Kupplungselemente (4, 5) miteinander verbunden sind, dadurch gekennzeichnet, daß zwei identische, aus Metall bestehende elastische Lamellen (10 und 11) mit konstanter Dicke, die die Zweige und Enden (3A, 3B, 3'A, 3'B) mit größerer Breite als die der Zweige aufweisen, sowie zwei Stege (8, 9) mit der gleichen konstanten Dicke und dem gleichen Außenprofil wie diese Enden ausgeschnitten werden, daß diese Stege zwischen die Enden (3A, 3B, 3'A, 3'B) der elastischen Lamellen eingefügt und dazwischen befestigt werden, um einen lamellierten Wandler zu erhalten.

14. Verfahren nach Anspruch 13, dadurch gekennzeichnet, daß außerdem zwei aus Metall bestehende Platten (12A, 12B, 13A, 13B) mit im wesentlichen dem gleichen Außenprofil wie die Stege ausgeschnitten werden und daß sie an den Stegen und den Enden der elastischen Lamellen befestigt werden.

15. Verfahren nach Anspruch 14, dadurch gekennzeichnet, daß die elastischen Lamellen, die zwei Stege und die zwei Platten so ausgeschnitten werden, daß sie über zerbrechliche Verbindungen (23) mit Längspositionierungsstreifen (20, 21) verbunden werden, die völlig identisch sind, daß diese Längsstreifen darüber angeordnet werden und daß nach dem Befestigen der elastischen Lamellen, der Stege und der Platten die zerbrechlichen Verbindungen aufgetrennt werden.

16. Anwendung des Wandlers nach einem der Ansprüche 1 bis 12 in einer Lastzelle (30) mit einem Block (31), der erste und zweite vertikale Stützen (32, 33) aufweist, die dazu bestimmt sind, mit einem Sockel bzw. einer Wägeplattform verbunden zu werden, und die über vier flexible Zonen (34-37) mit zwei horizontalen Balken (38, 39) verbunden sind, die in ihrer Mitte von zwei vertikalen Bohrungen (40, 41) in Gegenüberlage durchdrungen sind, sowie mit zwei Armen, einem oberen (42) und einem unteren (43), die freitragend über der ersten bzw. der zweiten vertikalen Stütze angebracht sind, wobei der Kraftwandler vertikal quer durch die Bohrungen in den horizontalen Balken eingesetzt und mit den Enden der freitragenden Arme verbunden ist.

17. Anwendung nach Anspruch 16, dadurch gekennzeichnet, daß der Wandler mit den Enden der freitragenden Arme gelenkig längs Achsen (44, 45) verbunden ist, die senkrecht zu den vertikalen Stützen und zu den horizontalen Balken verlaufen.

18. Anwendung nach Anspruch 16 oder 17, dadurch gekennzeichnet, daß der Wandler (51) Torsionsarme (50A, 50B) in Gegenüberlage zu seinen Zweigen (52A, 52B) aufweist.
